# EUROPÄISCHE PATENTANMELDUNG

(11) **EP 1 592 102 A1**
(43) Veröffentlichungstag der Anmeldung: **02.11.2005**
(21) Anmeldenummer: 05009505.8
(22) Anmeldetag: 29.04.2005
(51) Int. Cl.: H02G 3/00, H01R 12/24

(54) **Elektroinstallationsanordnung**

(30) Priorität: 29.04.2004 DE 102004021679
(71) Anmelder: Josef Geier, 82205 Geisenbrunn (DE)
(72) Erfinder: Josef Geier, 82205 Geisenbrunn (DE)
(74) Vertreter: Baronetzky, Klaus

(57) **Zusammenfassung**

Die Erfindung betrifft eine Elektroinstallationsanordnung, mit einer Mehrzahl von Stromleitungen, die eine Versorgungsspannung (Netzspannung) für ein Bauwerk von einem Verteiler (12) ausgehend zu Installations-Dosen (16) in diesem Bauwerk verteilen und mehrere Stromkreise bilden, und mit einem Installationsbus mit Signalleitungen (36, 38) in dem Bauwerk, über welche Steuersignale für Haustechnikeinheiten (84) weiterleitbar sind, dadurch gekennzeichnet, dass die Signalleitungen (36, 38) gemeinsam mit den Stromleitungen (30, 32, 34) in die Installations-Dosen (16) eingeführt sind und in diesen nach einem vorgegebenen Anschlussschema, das die Stromleitungen (30, 32, 34) und die Signalleitungen (36, 38) unterscheidet, angeschlossen sind.

## Beschreibung

Die Erfindung betrifft eine Elektroinstallationsanordnung, gemäß dem Oberbegriff von Anspruch 1.

Eine derartige Installationsanordnung ist beispielsweise aus der DE-OS 195 41 154 ersichtlich. Bei einer solchen Installationsanordnung werden Haustechnikeinheiten über einen EIB-Bus miteinander verbunden, um eine Steuerung über Aktoren und Sensoren zu realisieren. Typischerweise sind bei derartigen Lösungen Stecksysteme vorgesehen, über die beispielsweise die Aktoren oder Sensoren in festverlegte Dosen einbringbar sind. Über den Installationsbus, der hinsichtlich seiner elektrischen Parameter unter der Bezeichnung EIB genormt ist, werden Signale zur Steuerung der Haustechnikeinheiten übermittelt.

Die Haustechnikeinheiten selbst, zu den beliebige elektrische Verbraucher, wie festeingebaute Lampen oder typischerweise über Steckdosen betriebene elektrische Geräte wie Stereoanlagen oder Fernseher gehören, zu denen aber auch fest eingebaute Geräte wie ein Rolladenmotor gehören können, benötigen für den Betrieb die Netzspannung von 230 V. Wenn eine Leistung von beispielsweise 3000 W - zum Beispiel für einen Heizlüfter - bereitgestellt werden soll, ist dementsprechend eine Absicherung über 16 A erforderlich und entsprechende große Ströme müssen über Stromleitungen bereitgestellt werden.

Ein 50 Hz-Wechselstrom in einer derartigen Größenordnung erzeugt ein nicht unbeachtliches elektromagnetisches Feld, so dass Signalleitungen des Installationsbuses gestört werden können. Aus diesem Grund, aber auch aus Sicherheitsgründen werden Stromleitungen und die Signalleitungen des Installationsbuses regelmäßig getrennt verlegt.

Die Leitungsverlegung erfolgt heutzutage hauptsächlich durch Schlitze im Mauerwerk, wozu ein.beträchtlicher Aufwand erforderlich ist. Durch das Schlitzen des Mauerwerks wird die Wärmedämmung und die Festigkeit des Mauerwerks beeinträchtigt. Dennoch ist es.bislang erforderlich, einen erheblichen Installationsaufwand vorzunehmen, zumal bei einem typischen Installationsbus die Verlegung der Signalleitungen in Reihenschaltungen erfolgt, während die Stromleitungen sternförmig vom Verteilerkasten aus verlegt werden.

Nachteilig ist es bei den bisherigen Elektroinstallationsanordnungen auch, dass das Setzen beispielsweise einer Steckdose mitten in ein bereits verlegtes Kabel nicht ohne weiteres möglich ist. Auch wenn das Kabel ungekürzt durchschnitten wird, sind die so entstehenden abzuisolierenden Enden des Installationskabels zu kurz, um eine Montage einer Steckdose zu erlauben. Es muss eine Dose gesetzt werden, die aus Kunststoff besteht und bei den heutzutage typischerweise eingesetzten Lösungen kabelfrei ist. Durch Durchbrechungen dieser Dose werden die Enden des Installationskabels eingeführt und sollen nun an der Steckdose angeklemmt werden. Um ein Anklemmen zu ermöglichen, muss typischerweise ein Kabel.verlängert werden, was einen zusätzlichen Aufwand bedeutet.

Ein weiteres Problem der bislang vorgenommen Elektroinstallationen liegt darin, dass besondere Maßnahmen getroffen werden müssen, um die Installations-Dosen winddicht abzuschirmen. Ohne entsprechende Abdichtmaßnahmen erfolgt typischerweise ein unerwünschter Luftaustausch, gerade, wenn die Installationskabel - wie es heutzutage Standard ist - in Leerrohren verlegt werden. Die Abdichtung, beispielsweise von Steckdosen, ist recht aufwendig, so dass eine gewisse Luftströmung typischerweise trotz der unerwünschten Nebenwirkungen in Kauf genommen werden.

Daher liegt der Erfindung die Aufgabe zugrunde, eine Elektroinstallationsanordnung gemäß dem Oberbegriff von Anspruch 1 zu schaffen, die hinsichtlich des Installationsaufwands trotz der Realisierung von Signalleitungen besonders gering ist, wobei dennoch die Sicherheit der Installation gewährleistet und die Nachrüstbarkeit verbessert ist.

Diese Aufgabe wird erfindungegemäß von Anspruch 1 gelöst. Vorteilhafte Weiterbildungen ergeben sich aus den Unteransprüchen. Erfindungsgemäß besonders günstig ist es, dass die Signalleitungen und die Stromleitungen gemeinsam, aber deutlich räumlich getrennt den Haustechnikeinheiten zuführbar sind. Hierdurch entfällt praktisch der komplette Installationsaufwand für die zusätzlich vorgesehenen Signalleitungen, die meist in Reihe von Raum zu Raum weitergeführt sind. Überraschend ergibt sich durch die erfindungsgemäße Maßnahme, ein exakt vorgegebenes Anschlussschema vorzusehen, das Signalleitungen und Stromleitungen deutlich und unverwechselbar unterscheidet, ein gleichbleibender Sicherheitsstandard.

Das Anschlussschema kann beispielsweise so realisiert sein, dass Anschlussvorrichtung oder Anschlussklemmen an Installations-Dosen vorgesehen sind, die zu dem für die Anschlusskabel verwendeten Flachbandkabel nur dann passen, wenn die Installation in der richtigen Weise erfolgt. Diese Maßnahme kann durch ein geeignetes Rastermaß für die Installationskabel und die Anschlussklemmen realisiert sein, durch das ein Aufstecken in der falschen Richtung unmöglich gemacht wird. Das zutreffende Aufstecken kann zudem durch farbliche Kennzeichnung deutlich gemacht werden.

Erfindungsgemäß besonders günstig ist es auch, wenn.Installatiöns-Dosen verwendet werden, die die erwünschten Leitungen, also Signalleitungen und Stromleitungen, bereits in Form von Leiterbahnen bereitstellen. Dies erlaubt die Realisierung der Rohinstalation, also der Installation vor dem Putzen, ohne dass bereits Steckdosen oder Aktoren eingebracht sein müssten, aber dennoch ein vollständiges Prüfen der Installation einschließlich der Verbindungen.

Der Elektroinstallateur kann sich dann die Rohinstallation bereits abnehmen lassen, und etwaige spätere Beschädigungen, die häufig Streitpunkt bei der Abnahme der Fertiginstallation sind, gehen nicht zu seinen Lasten.

In vorteilhafter Ausgestaltung ist es vorgesehen, sämtliche Verbindungen zwischen Leitungen und Leiterbahnen an den erfindungsgemäßen Installations-Dosen durch Steckverbindungen, insbesondere aber durch Klemmverbindungen, bereitzustellen. Derartige Klemmverbindungsleisten sind an sich bekannt und werden erfindungsgemäß so modifiziert, dass ein asymmetrisches Rastermaß, also im Grunde zwei Rastermaße vorliegen, die zueinander nicht passen.

In weiterer vorteilhafter Ausgestaltung der Erfindung ist es vorgesehen, die Leiterbahnen über den Boden der Installations-Dosen, also versenkt und geschützt durch eine Isolierungsschicht aus dem Spritzgußkunststoff der Installations-Dosen, zu verlegen.

Dies bietet einen besonderen Schutz auch bei der sorglosen Montage von Steckdosen oder anderen Einbaueinheiten für die erfindungsgemäßen Installations-Dosen.

Besonders günstig ist es auch, wenn anstelle von einfachen durchgeschleiften Leiterbahnen, die am Dosengrund einen Abgriff für den Anschluss beispielsweise der Steckdosen bieten, gekreuzte Leiterbahnen verwendet werden. Dies ermöglicht gleich die gewünschte Richtungslenkung des verwendeten Anschlusskabels, das bevorzugt als besonderes Flachbandkabel ausgestattet ist.

In vorteilhafter Ausgestaltung ist es vorgesehen, dass das Rastermaß zwischen den drei oder fünf Stromleitungen gleich ist. Der Abstand zur ersten Signalleitung beträgt dann bevorzugt das eineinhalbfache dieses Rastermaßes, und der Abstand zur weiteren Signalleitung beträgt dann beispielsweise ein Fünftel des Rastermaßes der Stromleitung. Es versteht sich, dass die Anschlussklemmen und die Anschlusskabel je zueinander passende Leitungsabstände aufweisen.

Weitere Vorteile, Einzelheiten und Merkmale ergeben sich aus den Unteransprüchen und aus der nachfolgenden Beschreibung mehrere Ausführungsbeispiels anhand der Zeichnungen:

Es zeigen:
- Fig. 1: eine schematische Ansicht einer erfindungsgemäßen Installationsanordnung;
- Fig. 2: eine schematische Ansicht eines Endes eines Installationskabels, das für die erfindungsgemäße Installationsanordnung verwendbar ist;
- Fig. 3: eine Ansicht eines Schnittes durch einen Teil einer erfindungsgemäßen Installations-Dose in Kombination mit einem erfindungsgemäßen Installationskabel;
- Fig. 4: eine schematische Ansicht von zwei Teilen einander benachbarter Installations-Dosen mit einer Verbindungsbrücke;
- Fig. 5: eine schematische Ansicht aneinander angereihter Installationsdosen für eine erfindungsgemäße Elekroinstallationsanordnung;
- Fig. 6: eine schematische Darstellung von vier Installations-Dosen unter schematischer Darstellung der Kodierung;
- Fig. 7: einer Ansicht einer Installations-Dose in eingebrachter Haustechnikeinheit;
- Fig. 8: der Spannungsabgriff der Installations-Dose gemäß Fig. 7;
- Fig. 9: eine modifizierte Anschlussdose für Hohlwände;
- Fig. 10: eine weitere modifizierte Anschlussdose für die Aufputzmontag; und
- Fig. 11: eine schematische Darstellung einer modifizierten Anschlussvorrichtung für den Anschluss des Anschlusskabels.

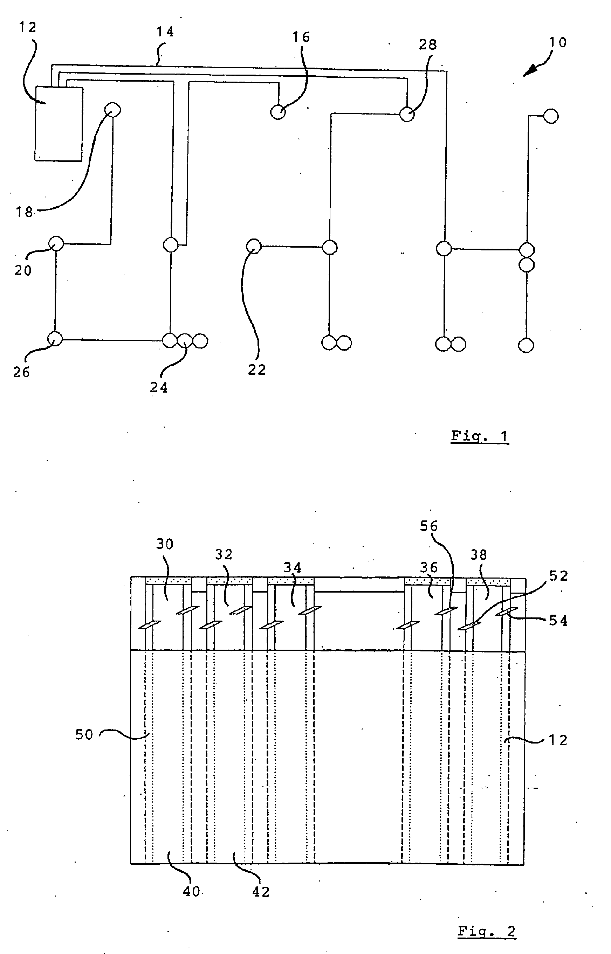

In Fig. 1 ist ein Schema einer Elektroinstallationsanordnung 10 darstellt. Ausgehend von einem Elektroverteiler 12 verlaufen erfindungsgemäße Anschlusskabel 14, deren Ausführung weiter unter erläutert ist, zu einer Vielzahl von Installations-Dosen 16. Die Installations-Dosen 16 sind für den Einbau unterschiedlicher Einheiten bestimmt. Beispielsweise kann in einer Installations-Dose 18 ein Sensor wie ein Rauchmelder eingebaut sein; in einer Installations-Dose 20 ein Schaltsensor; in einer Installations-Dose 22 ein Sensor wie ein Bewegungsmelder. In einer Installations-Dose 24 kann ein Aktor wie ein Schaltaktor vorgesehen sein. In einer Installations-Dose 26 kann ein Steckdoseneinsatz vorgesehen sein, und in einer Installations-Dose 28 kann ein Leuchtenauslass vorgesehen sein; die übrigen Installations-Dosen lassen sich erfindungsgemäß in beliebiger Weise mit Steckdosen, Aktoren, Sensoren oder sontigen Haustechnikeinheiten bestücken.

Es ist ersichtlich, dass das Anschlussschema nach der Art eines Sterns oder eines kombinierten Bus-Stern-Systems ausgeführt ist. Dies erlaubt die Realisierung kürzester Leitungen zum Verteiler 12.

Auch wenn hier die Räume des Gebäudes nicht im Einzelnen dargestellt sind, versteckt es sich, dass in der Praxis die Verlegung beispielsweise über ein Haus in verschiedenen Stockwerken und Räumen erfolgt.

Erfindungsgemäß wird ein besonderes Installationskabel 12 eingesetzt, das anhand von Fig 2 beschrieben ist. Das Installationskabel 12 weist in dem dargestellten Ausführungsbeispiel 3 Stromleitungen 30, 32 und 34 und zwei Signalleitungen 36 und 38 auf. Die Achsen 40 und 42 einander benachbarter Stromleiter 30 und 32 bzw. 32 und 34 weisen den gleichen Abstand, das Stromleiter-Rastermaß, auf. Demgegenüber ist der Abstand zwischen den Achsen der benachbarten Stromleitungen 34 und Signalleitungen 36 deutlich vergrößert, nämlich um 50%. In dem dargestellten Ausführungsbeispiel ist der Abstand zwischen den Signalleitungen 36 und 38 im Stromleiter-Rastermaß, wobei es in einer modifizierten Ausgestaltung vorgesehen ist, den Abstand deutlich zu reduzieren, auf beispielsweise ein Drittel oder ein Viertel des Stromleiter-Rastermaßes.

Es versteht sich, dass mit dieser Reduktion auch eine Querschnittsreduktion der Signalleitungen einhergehen sollte, was unkritisch ist, machdem über die Signalleitungen lediglich ganz geringe Ströme geleitet werden.

In dem dargestellten Ausführungsbeispiel ist das Installationskabel 14 als Flachbandkabel ausgebildet. Es ist eine gemeinsame Außen-isolierung 50 vorgesehen, die alle Leitungen umgibt. Jede Leitung ist zusätzlich mit einer farbig markierten Innenisolierung versehen, die von Schneidklemmen 52 je durchtreten wird. In an sich bekannter Weise bieten so die Schneidklemmen 52 und 54 je einen sicheren Kontakt für die zwischen ihnen eingeklemmte Leitung. In ebenfalls an sich bekannter Weise sind die Schneidklemmen je schrägstehend ausgebildet, so dass auch eine enge Beanstandung unkritisch ist. Dies ist aus Fig. 2 ersichtlich.

Bei der Ausführungsform gemäß Fig. 2 ist folgendes Anschlussschema zugrunde gelegt:

Die Stromleitung 30 ist als Erdleitung grün/gelb eingefärbt. Die Stromleitung 32 als Masseleitung ist schwarz, und die Stromleitung 43 als Phase-Leitung ist blau. Dies Signalleitung 36 ist ebenfalls schwarz, nachdem sie die Signalmasse bildet. Die Signalleitung 38 ist hingegen rot an ihrer Innenisolierung 56 und dient der Weiterleitung des Signals.

Auch bei versehentlichen Verdrehen des Installationskabels 14 würde die Phase 34 an gleicher Stelle zu liegen kommen, so dass die Signalleitungen frei von Netzspannungen bleiben würden.

In einer modifizierten Ausgestaltung ist es vorgesehen, mindestens die Signalleitung 36 in gleicher Weise wie die Stromleitung 32 auszubilden. Beim versehentlichen Vertauschen, das an sich nur durch gesonderte Manipulationen möglich ist, würden dann Verbraucher zwischen der Signalmasse und der Stromleitungsphase betrieben werden können, ohne dass das System an sich beschädigt würde.

Dieser fehlerhafte Anschlusszustand wird bei dieser Ausführungsform jedoch in jedem Fall durch eine entsprechende Alarmsignalisierung angezeigt; ein FI-Schalter, der in klassischer Weise in den Stromleitungen eingesetzt ist, würde auslösen.

Erfindungsgemäß ist es vorgesehen, dass der richtige Anschluss der erfindungsgemäßen Installationskabel jedenfalls auch durch FI-Schalter in an sich bekannter Weise überwacht wird.

Besonders günstig ist es auch, dass die Kabelenden der Stromleitungen 30 bis 34 erfindungsgemäß nicht vollständig abisoliert werden müssten. Sie sind auch bei der Montage noch geschützt. Demgegenüber können die Spitzen der Schneidklemmen 52 und 54, die die Innenisolierung je durch treten, praktisch als Prüfspitzen verwendet werden, um die zutreffende Kontaktierung an dieser Stelle zu überprüfen.

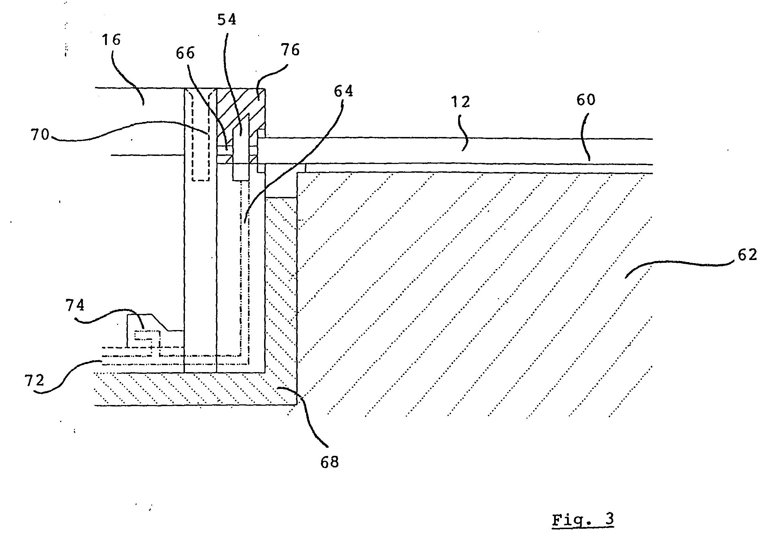

Aus Fig. 3 ist ersichtlich, in welcher Weise ein erfindungsgemäßes Anschlusskabel an einer erfindungsgemäßen Anschlussdose 16 angebracht sein kann.

Das Flachbandkabel 14 ist mit einem geeigneten Klebstoff 60, der entweder ein elastomerbasierender Klebstoff oder ein Hot-Melt-Klebstoff sein kann, auf dem Mauerwerk 62 aufgeklebt. In die Schalterdose ist eine Leiterbahn 64 integriert, die für die dargestellte Ausführungsform als Fünffach-Leiterbahn (drei Stromleitungen, zwei Signalleitungen) ausgebildet ist und in der Schneidklemme 54 endet. Die Ader 66 der betreffenden Leitung hat in an sich bekannter Weise Kontakt mit der Schneidklemme 54, die auch deren Isolierung durchtritt.

Die Leiterbahn 64 ist in das Kunststoffmaterial der Anschlussdose 16 eingebetet. Die Anschlussdose ist in beliebiger Weise, sei es durch eine Spreizvorrichtung oder, wie hier dargestellt, durch ein Befestigungsmaterial 68 - mit dem Mauerwerk 62 verbunden.

Den Schneidklemmen 54 benachbart ist ein Innengewinde-Sackloch 70 ausgebildet, das der Befestigung der Haustechnikeinheit dient, die in der Anschlussdose 16 aufgenommen werden soll.

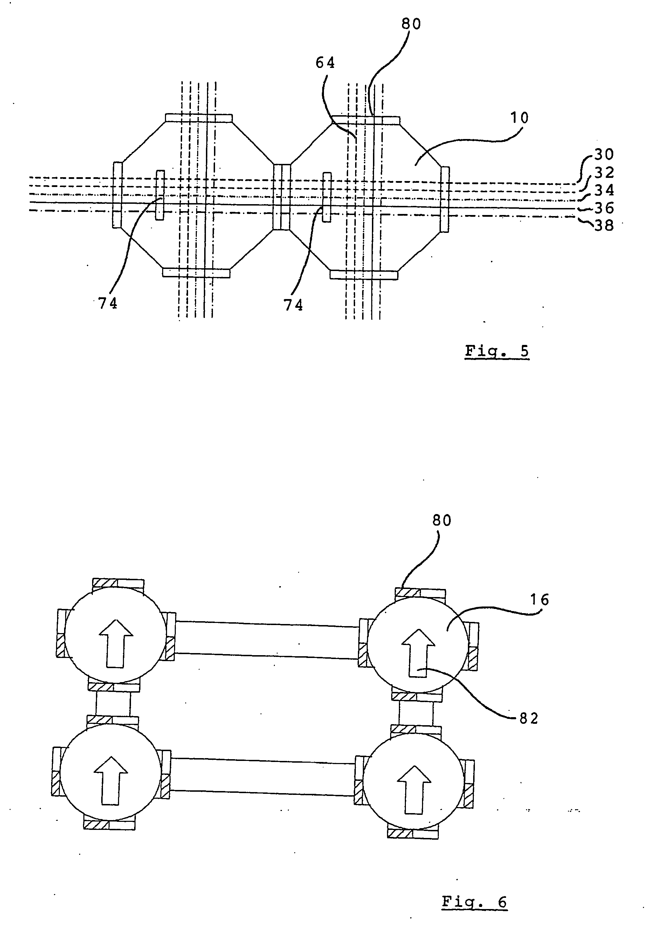

Die Leiterbahn 64 weist am Boden 72 der Anschlussdose 16 eine Abzweigung auf. Dort ist eine Steckbuchse 74 ausgebildet, die dem Anschluss eines Steckers dient, der mit der Haustechnikeinheit verbunden ist. Diese Steckbuchse ist im Grunde auch aus Fig. 5 ersichtlich.

In an sich bekannter Weise wird die Schneidklemme 54 mit einer Abdeckkappe 76 abgedeckt, um ein versehentliches Berühren der herausragenden Schneidklemme zu verhindern.

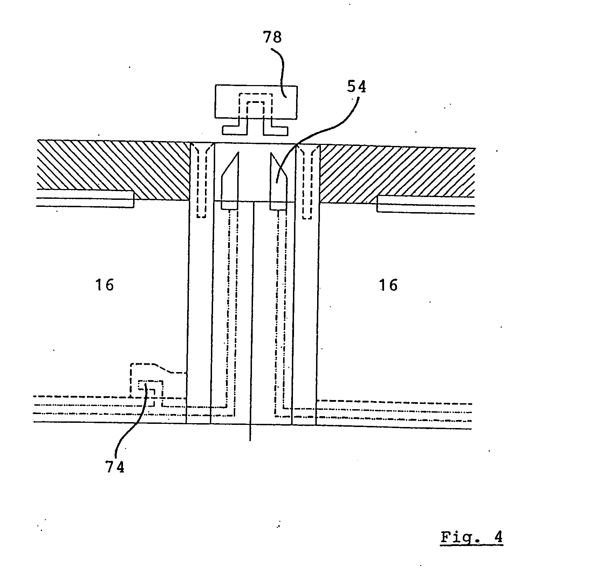

Aus Fig. 4 ist ersichtlich, in welcher Weise zwei einander benachbarte Anschlussdosen 10 miteinander verbunden werden können. Die Schneidklemmen 54 werden bei dieser Lösung mit einer Verbindungsbrücke 78 überbrückt, die zugleich auch die Isolierung nach vorne hin sicherstellt.

Aus Fig. 5 ist ersichtlich, dass die Leiterbahren 64 bei jeder Installations-Dose 16 gekreuzt verlegt sind. Gleiche Leitungen sind je durchverbunden, was sich in Leiterbahntechnik leicht realisieren lässt. Man erkennt, dass jede Installations-Dose 16 vier Anschlussklemmen 80 aufweist, die die Schneidklemmen 54 je tragen.

Aus Fig. 6 ist ersichtlich, wie eine Mehrzahl von Installations-dosen 16 gemeinsam verschaltet sind. Anschlussvorrichtungen 80 sind je farblich markiert, und für den Elektroinstallateur ist es ein Leichtes, zu erkennen, dass einander zugehörige Seiten der Anschlussdosen in gleicher Weise miteinander verbunden sein sollen. Zusätzlich kann jede Anschlussdose beispielsweise mit einem Pfeil 82 gekennzeichnet sein, der nach oben weist.

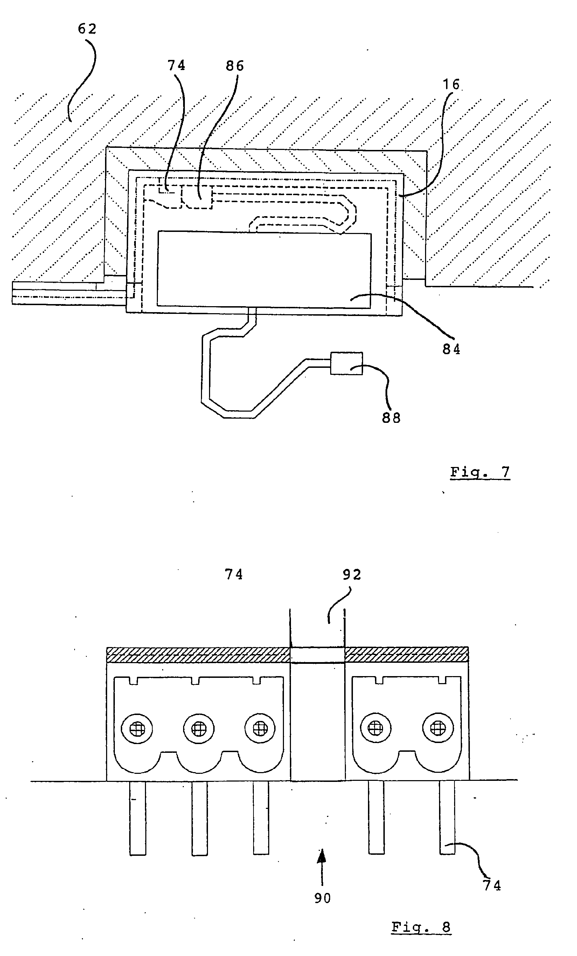

Aus Fig. 7 ist ersichtlich, in welcher Weise eine Haustechnikeinheit 84 in der erfindungsgemäßen Installations-Dose 16 eingebracht sein kann. Ein Stecker 86 steckt in der Steckbuchse 74, wenn die Haustechnikeinheit 84 eingebaut wird. Hierdurch ist der Spannungsabgriff für die Haustechnikeinheit gewährleistet. Beispielsweise kann die Haustechnikeinheit 84 als Schaltaktor ausgeführt sein; der über die Steuerleitungen gesteuert wird und Leuchtenklemmen 88 nach Vorgabe des Bedieners einschaltet und ausschaltet.

Es versteht sich, dass beliebige andere Haustechnikeinheiten, wie beispielsweise Steckdosen, dort eingebracht sein können. Für den Abgriff der Signalleitungen 36 und 38 ist es günstig, an der Vorderseite des Doseneinsatzes eine sogenannte Westernbuchse, die zweipolig sein kann, auszubilden. Eine derartige Buchse kann entweder mit einem Steckdoseneinsatz kombiniert werden oder separat zentral in der Vorderseite ausgeführt sein.

Aus Fig. 8 ist ersichtlich, wie eine Buchse 74 für den Spannungsabgriff realisiert sein kann. Auch hier ist bevorzugt ein etwas größerer Abstand 90 zwischen den Signalleitungen einerseits und den Stromleitungen andererseits vorgesehen. Durch eine Trennwand 92 ist zudem eine mechanische Blockade gewährleistet, die verhindert, dass der betreffende Stecker falsch eingesteckt wird.

Auch wenn hier die Leiterbahnen 74 mit hochrechteckigem Querschnitt dargestellt sind, versteht es sich, dass anstelle dessen auch eine flachrechteckige Ausführung möglich ist und günstig sein kann.

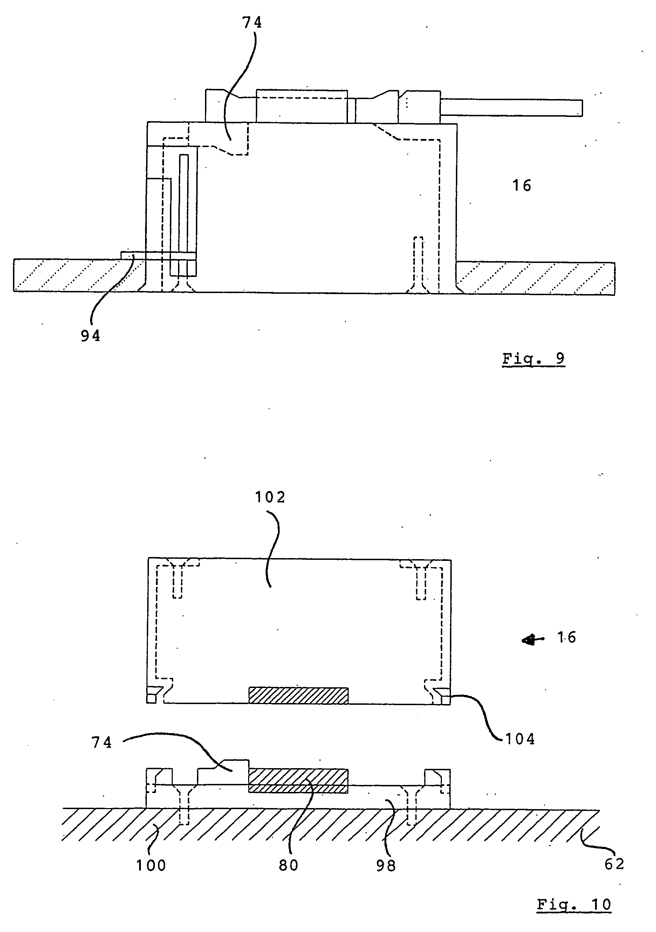

Aus Fig. 9 ist ersichtlich, wie eine Installations-Dose 16 ausgebildet sein kann, wenn eine mauerwerksfreie Wand, also eine Hohlwand realisiert ist. In diesem Fall lässt sich die erfindungsgemäße Flachbandleitung an der Rückseite der Installations-Dose 16 anstecken oder anklemmen, und die Steckbuchse 74 ist an der gleichen Stelle vorgesehen, wie es bei den vorstehend beschrieberien Ausführungsformen vorgesehen ist.

Über an sich bekannte Sperrklinken 94 lässt sich eine sichere Befestigung dieser Hohlwanddose realisieren.

Eine weiter modifizierte Installations-Dose 16 ist aus Fig. 10 ersichtlich. Es handelt sich hier um eine Aufputzdose. Diese Dose ist im Grunde zweiteilig, wobei der untere Teil 98 sich über Befestigungsschrauben 100 mit dem Mauerwerk 62 verbinden lässt. Auch hier kommt eine Flachbandleitung zum Einsatz, die an den an sich bekannten Anschlussklemmen 80 angeklemmt wird und die Steckbuchse 74 speist. Durch das Aufsetzen des Oberteils 102 wird zugleich über eine Dichtung 104 eine Abdichtung der Installations-Dose 16 gewährleistet.

Das Oberteil 102 ist praktisch flachzylindrisch ausgebildet und kann dementsprechend frei von Leiterbahnen sein.

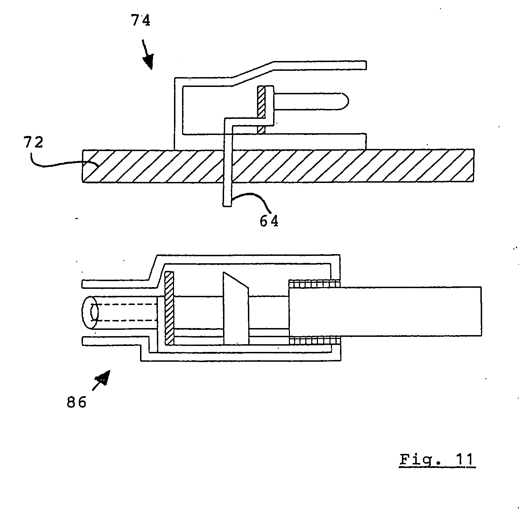

Aus Fig. 11 ist eine weitere Variante des Anschlusses ersichtlich, wobei hier wie auch in den weiteren Figuren Bezugzeichen mit den gleichen Teilen dargestellt sind. Die Steckbuchse 74 passt mechanisch genau zu dem Stecker 86. Sie liegt am Boden 72 der Installations-Dose an und ist mit der Leiterbahn 64 verbunden. Der Stecker 86 ist demgegenüber in beliebiger geeigneter Weise ausgebildet, wobei das dargestellte Ausführungsbeispiel einen Anschluss mit einer Schneidklemme zeigt, entsprechend derjenigen, wie sie außen an den Installations-Dosen 16 vorgesehen ist.

## Patentansprüche

1. Elektroinstallationsanordnung, mit einer Mehrzahl von Stromleitungen, die eine Versorgungsspannung (Netzspannung) für ein Bauwerk von einem Verteiler (12) ausgehend zu Installations-Dosen (16) in diesem Bauwerk verteilen und mehrere Stromkreise bilden, und mit einem Installationsbus mit Signalleitungen (36, 38) in dem Bauwerk, über welche Steuersignale für Haustechnikeinheiten (84) weiterleitbar sind, **dadurch gekennzeichnet, dass** die Signalleitungen (36, 38) gemeinsam mit den Stromleitungen (30, 32, 34) in die Installations-Dosen (16) eingeführt sind und in diesen nach einem vorgegebenen Anschlussschema, das die Stromleitungen (30, 32, 34) und die Signalleitungen (36, 38) unterscheidet, angeschlossen sind.

2. Elektroinstallationsanordnung nach Anspruch 1, **dadurch gekennzeichnet, dass** das vorgegebenen Anschlussschema eine zu den Signalleitungen (36, 38) und den Stromleitungen (30, 32, 34) passende Codierung aufweist, die ein Vertauschen der Signalleitungen (36, 38) und Stromleitungen (30, 32, 34) verhindert.

3. Elektroinstallationsanordnung nach Anspruch 1, **dadurch gekennzeichnet, dass** die Signalleitungen (36, 38) und die Stromleitungen (30, 32, 34) in einem gemeinsamen Installationskabel geführt sind, wobei Signalleitungen (36, 38) und Stromleitungen (30, 32, 34) je in einem vorgegebenen Rastermaß beabstandet sind, und die beiden Rastenmaße insbesondere voneinander verschieden sind und/oder insbesondere um etwa die Hälfte eines Rastermaßes.

4. Elektroinstallationsanordnung nach einem der vorhergehenden Ansprüche, **dadurch gekennzeichnet, dass** die Anschlüsse der Signalleitungen (36, 38) und Stromleitungen (30, 32, 34) in den Installations-Dosen (16) über werkzeuglose Anschlussvorrichtungen. (80), insbesondere über Schneidklemmen (52, 54), bereitgestellt sind.

5. Elektroinstallationsanordnung nach einem der vorhergehenden Ansprüche, **dadurch gekennzeichnet, dass** die Signalleitungen (36, 38) und die Stromleitungen (30, 32, 34) durch die Installations-Dosen (16) durchschleifbar sind und insbesondere die Anschlussvorrichtung (80) an einander gegenüberliegenden Seiten angeordnet sind.

6. Elektroinstallationsanordnung nach Anspruch 5, **dadurch gekennzeichnet, dass** die Installations-Dosen (16) Zusatzanschlüsse aufweisen, die sich quer, insbesondere senkrecht zu den Anschlussvorrichtung (80) erstrecken und mit welchen die Signalleitungen (36, 38) und die Stromleitungen (30, 32, 34) bezogen auf die Installations-Dosen (16) kreuzweise verlegbar sind.

7. Elektroinstallationsanordnung nach einem der vorhergehenden Ansprüche, **dadurch gekennzeichnet, dass** jede Installations-Dose (16) eine Steckbuchse (74) aufweist, in welche ein Stecker (86) für einen Aktor einen Sensor oder.eine Steckdose einsteckbar ist.

8. Elektroinstallationsanordnung nach Anspruch 7, **dadurch gekennzeichnet, dass** die Steckbuchse (74) eine Anzahl von Kontakten aufweist, die der Summe der Anzahl von Signalleitungen (36, 38) und Stromleitungen (30, 32, 34) entspricht und dass der Stecker (86) eine Anzahl von Steckkontakten aufweist, die von dem erwünschten Abgriff für den Aktor oder die Steckdose abhängen.

9. Elektroinstallationsanordnung nach einem der vorhergehenden Ansprüche, **dadurch gekennzeichnet, dass** für Sensoren, Aktoren, Schalter und Steckdosen die gleiche Installations-Dose (16) eingesetzt ist.

10. Elektroinstallationsanordnung nach einem der vorhergehenden Ansprüche, **dadurch gekennzeichnet, dass** die Signalleitungen (36, 38) in einem Zweileitersystem ausgeführt sind und dass drei bis fünf Stromleitungen (30, 32, 34) parallel zueinander in dem Installationskabel geführt sind.

11. Elektroinstallationsanordnung nach einem der vorhergehenden Ansprüche, **dadurch gekennzeichnet, dass** das für die Leitungen verwendete Installationskabel (14) ein Flachbandkabel ist, das insbesondere im Putz verlegbar ist und für die Bereitstellung von Richtungsänderungen leicht beschädigungsfrei knickbar ist.

12. Elektroinstallationsanordnung nach einem der vorhergehenden Ansprüche, **dadurch gekennzeichnet, dass** die Anschlussklemmen der Installations-Dosen (16) farbig **gekennzeichnet** sind und die Installationskabel gleiche oder gleichartige farbige Kennzeichnungen aufweisen.

13. Elektroinstallationsanordnung nach einem der vorhergehenden Ansprüche, **dadurch gekennzeichnet, dass** die Signalleitungen (36, 38) und die Stromleitungen (30, 32, 34) gemeinsam in einer Sternverteilung oder einer kombinierten Bus-Sternverteilung fällig sind.

14. Installationsanordnung nach einem der vorhergehenden Ansprüche, **dadurch gekennzeichnet, dass** eine Installations-Dose (16) Leiterbahnen (64) aufweist, die innenliegend, insbesondere an ihren Seitenwänden und an ihrer Rückwand entlang, geführt sind und dass die Dose (16) als geschlossene, winddichte und im Wesentlichen flachzylindrische Einheit ausgebildet ist.

15. Elektroinstallationsanordnung nach einem der vorhergehenden Ansprüche, **dadurch gekennzeichnet, dass** die Installationskabel (14) zusammen mit den Installations-Dösen (16) eine elektrisch verbundene Rohinstallation bilden, die eine Installationsprüfung ermöglicht.

16. Elektroinstallationsanordnung nach einem der vorhergehenden Ansprüche, **dadurch gekennzeichnet, dass** dass die Installations-Dosen (16) aneinanderreihbar ausgestaltet sind und die Anschlussvorrichtung (80) benachbarter Installations-Dosen (16) über Steckbrücken verbindbar sind.

17. Elektroinstallationsanordnung nach einem der vorhergehenden Ansprüche, **dadurch gekennzeichnet, dass** die Signalleitungen (36, 38) über eine gemeinsame.Metallisierung, insbesondere auf der Isolierung des Anschlusskabels (14) abgeschirmt sind und dass insbesondere der Außendurchmesser der Signalleitungsisolierung geringer als der Außendurchmesser der Isolierung der Stromleitungen (30, 32, 34) ist.

18. Elektroinstallationsanordnung nach einem der vorhergehenden Ansprüche, **dadurch gekennzeichnet, dass** das Installationskabel (14), das aus gemeinsam geführten Stromleitungen (30, 32, 34) und Signalleitungen (36, 38) besteht, auf das Mauerwerk (62) aufgeklebt ist.

19. Elektroinstallationsanordnung nach einem der vorhergehenden Ansprüche, **dadurch gekennzeichnet, dass** ein Formstück in dem Installationskabel (14) eingefügt ist, das eine Richtungsänderung des Installationskabels (14) erlaubt und insbesondere einen Einganganschluss und einen um 90° versetzten Ausgangsanschluss aufweist.
